(19) Europäisches Patentamt
European Patent Office
Office européen des brevets

(11) **EP 2 193 597 B1**

(12) **EUROPÄISCHE PATENTSCHRIFT**

(45) Veröffentlichungstag und Bekanntmachung des Hinweises auf die Patenterteilung:
**06.03.2013 Patentblatt 2013/10**

(21) Anmeldenummer: **08803412.9**

(22) Anmeldetag: **29.08.2008**

(51) Int Cl.:
**H02M 1/15** (2006.01)    **H02M 3/158** (2006.01)

(86) Internationale Anmeldenummer:
**PCT/EP2008/061422**

(87) Internationale Veröffentlichungsnummer:
**WO 2009/027523 (05.03.2009 Gazette 2009/10)**

(54) **MEHRKANALIGER GLEICHSTROMSTELLER DER UNABHÄNGIG VON DER AUSGANGSLEISTUNG AN DER LÜCKGRENZE ARBEITET**

MULTI-CHANNEL DC CONTROLLER OPERATING INDEPENDENTLY OF OUTPUT POWER IN CRITICAL CONDUCTION MODE

HACHEUR MULTI-CANAUX FONCTIONNANT À LA LIMITE DE LA DISCONTINUITÉ INDÉPENDAMMENT DE LA PUISSANCE DE SORTIE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **31.08.2007 DE 102007041510**

(43) Veröffentlichungstag der Anmeldung:
**09.06.2010 Patentblatt 2010/23**

(73) Patentinhaber: **Kostal Industrie Elektrik GmbH
58513 Lüdenscheid (DE)**

(72) Erfinder: **BARTLING, Ralf
DE-58730 Fröndenberg (DE)**

(74) Vertreter: **Kerkmann, Detlef
Leopold Kostal GmbH & Co. KG
An der Bellmerei 10
58513 Lüdenscheid (DE)**

(56) Entgegenhaltungen:
**EP-A- 0 837 548    JP-A- 2004 357 388**

- **BLAISE DESTRAZ ET AL: "High Efficient Interleaved Multi-channel dc/dc Converter Dedicated to Mobile Applications" THE 2006 IEEE INDUSTRY APPLICATIONS CONFERENCE FORTY-FIRST IAS ANNUAL MEETING, CONFERENCE RECORD OF, IEEE, PI, 1. Oktober 2006 (2006-10-01), Seiten 2518-2523, XP031026372 ISBN: 978-1-4244-0364-6**
- **SCHEIBLE G ET AL: "System engineering aspects and power elctronics in an autonomous photovoltaic-hydrogen system" POWER ELECTRONIC DRIVES AND ENERGY SYSTEMS FOR INDUSTRIAL GROWTH, 1998 . PROCEEDINGS. 1998 INTERNATIONAL CONFERENCE ON PERTH, WESTERN AUSTRALIA 1-3 DEC. 1998, PISCATAWAY, NJ, USA,IEEE, Bd. 1, 1. Dezember 1998 (1998-12-01), Seiten 475-480, XP010720722 ISBN: 978-0-7803-4879-0**

EP 2 193 597 B1

**Beschreibung**

Die Erfindung betrifft einen mehrkanaligen Gleichstromsteller, mit mehreren parallelen Stromkanälen, die durch einen Mikrocontroller zueinander zeitversetzt gesteuert werden, wobei die Stromkanäle jeweils mindestens zwei Halbleiterschalter aufweisen, durch die sie vom Mikrocontroller entweder als Hochsetzsteller oder als Tiefsetzsteller betrieben werden können.

Ein derartiger Gleichstromsteller ist in der Veröffentlichung "BLAISE DESTRAZ ET AL: "High Efficient Interleaved Multi-channel dc/dc Converter Dedicated to Mobile Applications" THE 2006 IEEE INDUSTRY APPLICATIONS CONFERENCE FORTY-FIRST IAS ANNUAL MEETING, CONFERENCE RECORD OF, IEEE, PI, 1. Oktober 2006 (2006-10-01), Seiten 2518-2523, XP031026372 ISBN: 978-1-4244-0364-6" beschrieben.

Aus der deutschen Patentanmeldung DE 10 2004 011 801 A1 ist ein Gleichstromsteller mit vier parallelen Stromkanälen bekannt, der als ein reiner Hochsetzsteller beschrieben ist. Zur Steuerung dieses Gleichstromstellers sind externe Zeitglieder erforderlich.

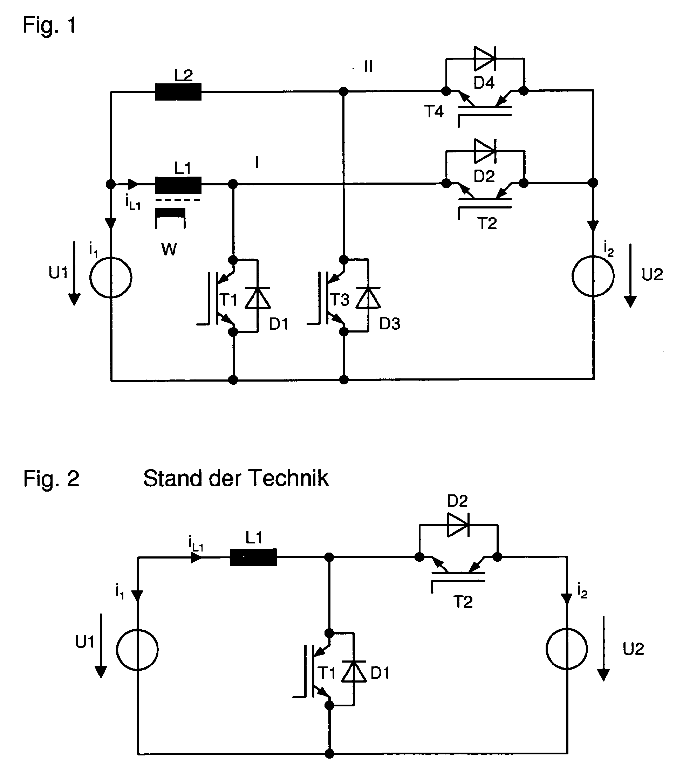

Es sind darüber hinaus auch bidirektionale Gleichstromsteller bekannt. Die Grundschaltung eines solchen Gleichstromstellers ist in der Figur 2 dargestellt.

Es stellte sich die Aufgabe einen Gleichstromsteller zu schaffen, der einfach und kostengünstig aufgebaut ist, möglichst vielseitig und effizient einsetzbar ist und einen möglichst glatten Ausgangsstrom liefert.

Diese Aufgabe wird erfindungsgemäß dadurch gelöst, dass wenigstens ein Stromkanal eine Einrichtung zur Erfassung des Stromnulldurchgangs aufweist, dass der Mikrocontroller die Periodenzeit der Stromnulldurchgänge in diesem Stromkanal erfasst, dass der Mikrocontroller aufgrund der erfassten Periodenzeit alle Stromkanäle an der Lückgrenze betreibt, und dass der Mikrocontroller die Stromkanäle mit einem zeitlichen Versatz ansteuert, wobei der zeitliche Versatz durch die erfasste Periodenzeit geteilt durch die Anzahl der Stromkanäle gegeben ist.

Ein Ausführungsbeispiel der Erfindung ist in der Zeichnung schematisch dargestellt und wird im folgenden anhand der Zeichnung näher erläutert.

Es zeigen

| | |
|---|---|
| Figur 1 | die Grundschaltung eines erfindungsgemäßen mehrkanaligen bidirektionalen Gleichstromstellers, |
| Figur 2 | die Grundschaltung eines bidirektionalen Gleichstromstellers nach dem Stand der Technik, |
| Figuren 3 bis 5 | Stromverlaufsdiagramme eines Hochsetzstellers, |
| Figuren 6 bis 8 | Stromverlaufsdiagramme eines Tiefsetzstellers, |
| Figur 9 | ein Verwendungsbeispiel eines bidirektionalen Gleichstromstellers, |
| Figur 10 | einen Regelkreis nach dem Stand der Technik, |
| Figur 11 | die Grundschaltung eines bidirektionalen, an der Lückgrenze betreibbaren Gleichstromstellers, |
| Figur 12 | ein Stromverlaufsdiagramm der Schaltung gemäß der Figur 11 im Hochsetzstellerbetrieb, |
| Figur 13 | einen Regelkreis zur Schaltung gemäß der Figur 11, |
| Figur 14 | ein Stromverlaufsdiagramm eines mehrkanaligen Gleichstromstellers im Hochsetzstellerbetrieb, |
| Figur 15 | ein weiteres Stromverlaufdiagramm der Schaltung gemäß Figur 11 als Tiefsetzsteller, |
| Figur 16 | einen Abschnitt eines Regelkreises, |
| Figur 17 | eine vereinfachte Darstellung des Regelkreisabschnitts gemäß der Figur 16, |
| Figur 18 | ein Stromverlaufdiagramm eines mehrkanaligen Gleichstromstellers im Tiefsetzstellerbetrieb. |

Die Figur 2 zeigt die schematisch dargestellte Grundschaltung eines bidirektionalen Gleichstromstellers, an der dessen grundsätzliche . Funktionsweise erläutert werden soll. Der Gleichstromsteller besteht im wesentlichen aus einer ersten und einer zweiten Spannungsquelle (U1, U2), einer Speicherdrossel L1, sowie aus zwei Halbleiterschaltem (T1, T2), die bevorzugt als IGBT (Insulated Gate Bipolar Transistor) ausgebildet sein können. Parallel zu den Lastanschlüssen der Halbleiterschalter (T1, T2) ist jeweils eine Freilaufdiode (D1, D2) geschaltet.

Die Halbleiterschalter (T1, T2) sind derart mit den anderen Bauelementen verschaltet, dass bei einem durchgeschalteten ersten Halbleiterschalter T1 die Anschlüsse der Speicherdrossel L1 über den ersten Halbleiterschalter T1 mit der ersten Spannungsquelle U1 verbunden sind, und bei einem durchgeschaltetem zweiten Halbleiterschalter T2 die Speicherdrossel L1 mit dem zweiten Halbleiterschalter T2 und den beiden Spannungsquellen (U1, U2) zugleich in Reihe geschaltet ist.

Das Funktionsprinzip eines derartigen Gleichstromstellers besteht darin, dass durch Einschalten eines der Halbleiterschalter (T1 bzw. T2) die Speicherdrossel L1 bestromt wird, die in daraufhin ein Magnetfeld aufbaut. Die in diesem Magnetfeld gespeicherte Energie bewirkt nach dem Ausschalten des einen Halbleiterschalters (T1 bzw. T2) einen Induktionsstrom (Ausgangsstrom $i_2$ bzw. $i_1$), der über die zum jeweils anderen Halbleiterschalter (T2 bzw. T1) gehörende Freilaufdiode (D2 bzw. D1) und eine der Spannungsquellen (U2, U1) fließt.

Zum kontinuierlichen Betrieb ist eine Taktung eines der Halbleiterschalter (T1 bzw. T2) erforderlich, beispielsweise durch eine PWM-Steuerung (PWM = Pulsweitenmodulation), die durch einen zentrale Steuerungseinrichtung und besonders vorteilhaft durch einen Mikrocontroller realisiert sein kann. Ohne Beschränkung der Allgemeinheit wird diese Steuerungseinrichtung im folgenden als Mikrocontroller bezeichnet. Zur Vereinfachung wurde in den Figuren auf eine Darstellung des Mikrocontrollers verzichtet.

Grundsätzlich sind zwei Betriebsarten des Gleichstromstellers zu unterscheiden, und zwar den Hochsetzstellerbetrieb und den Tiefsetzstellerbetrieb.

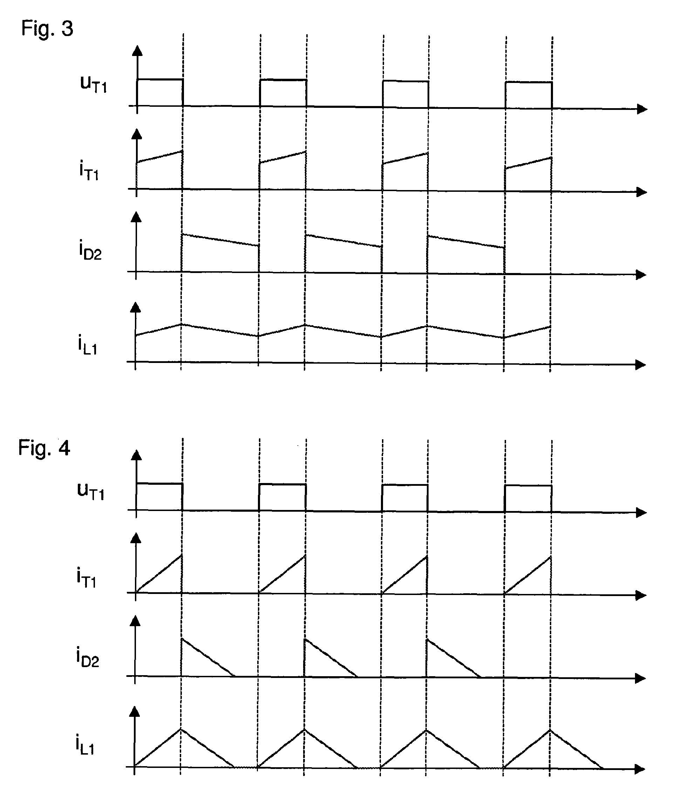

### Hochsetzstellerbetrieb (Figuren 3 bis 5)

Im Hochsetzstellerbetrieb fließt die Energie von der ersten Spannungsquelle U1 zur zweiten Spannungsquelle U2. Dazu wird der Halbleiterschalter T1 mit einem geeigneten PWM-Signal angesteuert. Der Halbleiterschalter T2 ist in diesem Betriebszustand nicht aktiv und daher stromlos. Damit die Schaltung arbeiten kann, muss die Spannung $u_2$ der zweiten Spannungsquelle U2 größer sein als die Spannung $u_1$ der ersten Spannungsquelle U1.

Beim Betrieb eines Gleichstromstellers sind grundsätzlich drei unterschiedliche Betriebszustände definiert. Diese Betriebszustände sind vom Stromverlauf $i_{L1}$ in der Speicherdrossel L1 bestimmt. Für die drei Betriebszustände sind die typischen Strom- und Spannungsverläufe in den Figuren 3 bis 5 dargestellt. Hierbei steht $u_{T1}$ für die Ansteuerspannung des ersten Halbleiterschalters T1 und $i_{T1}$, $i_{D2}$ und $i_{L1}$ für die durch den ersten Halbleiterschalter T1, die zugehörige Diode D1 und die Speicherdrossel L1 fließenden Ströme.

Die drei möglichen Betriebszustände des Hochsetzstellers sind:

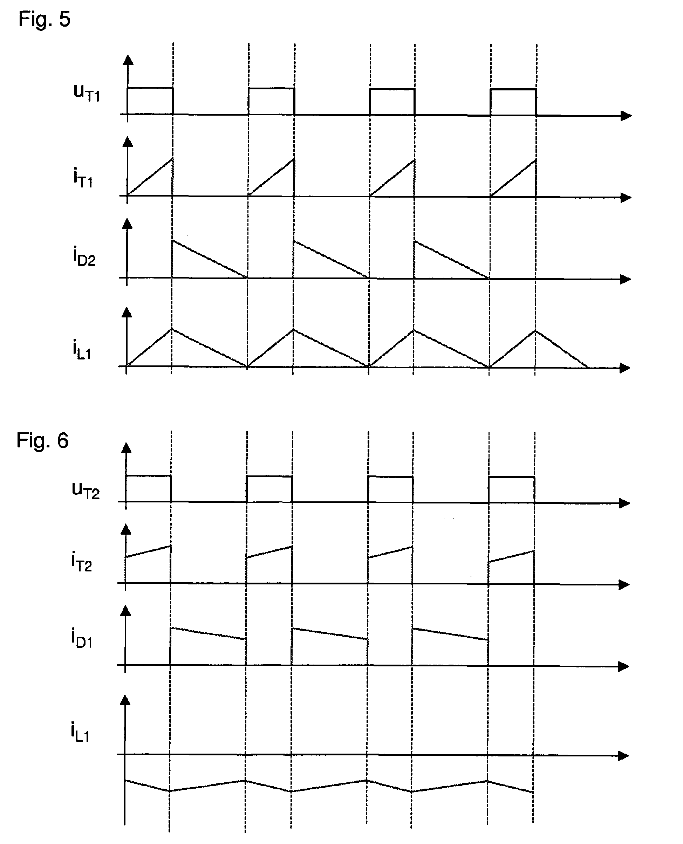

- kontinuierlicher Betrieb, d. h. der Strom $i_{L1}$ in der Speicherdrossel L1 weist keine Nullstellen auf (Figur 3),
- diskontinuierlicher Betrieb, d. h. es treten Zeiträume auf, in denen die Speicherdrossel L1 stromlos ist (Figur 4),
- Betrieb an der Lückgrenze (Transition Mode). Hier wird durch eine geeignete Ansteuerung des Halbleiterschalters T1 der Strom $i_{L1}$ in der Speicherdrossel L1 an der Lückgrenze, das heißt genau zwischen dem kontinuierlichen und dem diskontinuierlichen Betrieb gehalten (Figur 5).

### Kontinuierlicher Hochsetzstellerbetrieb (Figur 3)

Der Strom $i_{L1}$ in der Speicherdrossel L1 ist hier ohne Nullstellen. Während der Einschaltphase des Halbleiterschalters T1 hängt der Strom $i_{L1}$ von folgender Differentialgleichung ab:

$$u_{L_1} = L \frac{di_{L1}}{dt}$$

Wenn die Diode D2 leitet gilt:

$$u_1 - u_2 = L \frac{di_{L1}}{dt}$$

Da $u_2$ größer als $u_1$ ist, wird der Differentialquotient negativ und der Strom sinkt in dieser Phase ab. Generell hängt also die Stromverlauf von der Einschaltzeit des Halbleiterschalters T1, den Spannungen $u_1$ und $u_2$ und der Induktivität L der Speicherdrossel L1 ab.

### Diskontinuierlicher Hochsetzstellerbetrieb (Figur 4)

In diesem Fall weist der Strom $i_{L1}$ durch die Speicherdrossel L1 Nullstellen auf. Dieser Betriebszustand wird häufig auch "Lückbetrieb" genannt.

### Betrieb des Hochsetzstellers an der Lückgrenze (Transition Mode) (Figur 5)

In der Figur 5 ist der Betrieb des Hochsetzstellers an der Lückgrenze, der auch als Transition Mode bezeichnet wird, dargestellt. Der Vorteil dieses Betriebszustands ist, dass der Halbleiterschalter T1 noch im stromlosen Zustand wieder eingeschaltet wird und so die Schaltverluste minimal sind. Weiterhin kann die Freilaufdiode D1 als "normale" schnelle Siliziumdiode ausgeführt sein. Häufig findet man in den Hochsetzstellern von Solarwechselrichtern Siliziumkarbid-Dioden, da die sogenannten Reverse Recovery Ströme der Diode massiv die Verluste im Halbleiterschalters T1 bestimmen. Weiterhin wird die Speicherdrossel L1 optimal ausgenutzt, d. h. es existieren keine Zeiträume, in denen die Speicherdrossel L1 stromlos ist und keine Energie überträgt.

Bei Gleichstromstellern, die mit einer konstanten Schaltfrequenz arbeiten, bestimmt der jeweilige Lastzustand, welcher der drei oben genannten Betriebszustände sich einstellt.

**Tiefsetzstellerbetrieb (Figuren 6 bis 8)**

Im Tiefsetzstellerbetrieb fließt in der Schaltung gemäß der Figur 2 die Energie von der Spannungsquelle U2 nach U1. Dazu wird der Halbleiterschalter T2 mit einer geeigneten pulsweitenmodulierten Ansteuerspannung $u_{T2}$ angesteuert. Der Halbleiterschalter T1 ist nicht aktiv und daher stromlos. Damit die Schaltung arbeiten kann, muss $u_2$ hier ebenfalls größer als $u_1$ sein.

Analog zu den Betriebszuständen des Hochsetzstellers verdeutlichen die Figuren 6 bis 8 die drei möglichen Betriebszustände im Tiefsetzstellerbetrieb. Aufgetragen sind wiederum die charakteristischen Stromverläufe $i_{T2}$, $i_{D1}$ und $i_{L1}$ gegen den Verlauf der Ansteuerspannung $U_{T2}$ des zweiten Halbleiterschalters T2.

Dargestellt sind die Betriebszustände:

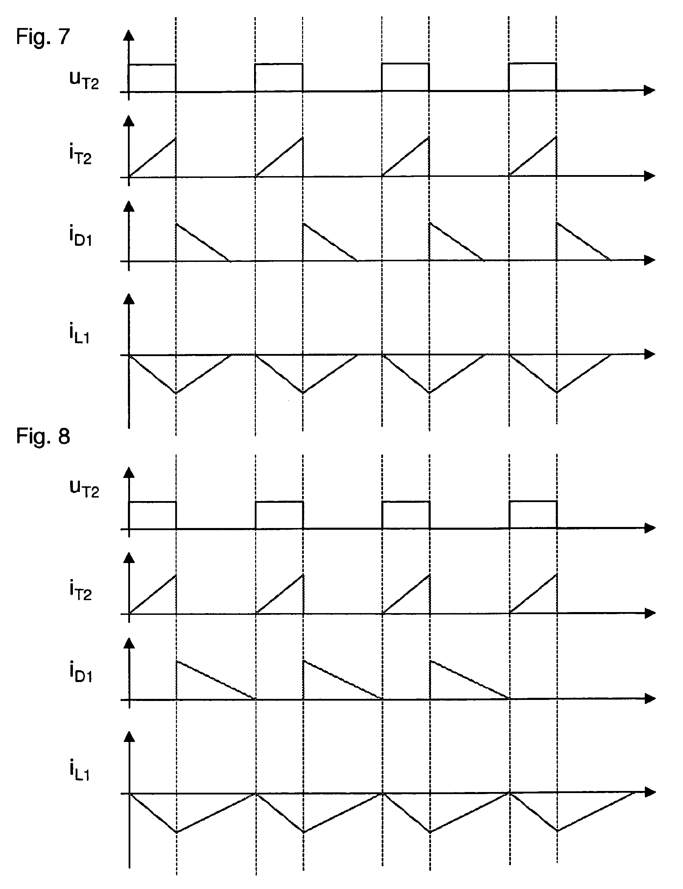

- kontinuierlicher Betrieb (Figur 6),
- diskontinuierlicher Betrieb (Figur 7),
- Betrieb an der Lückgrenze (Transition Mode; Figur 8).

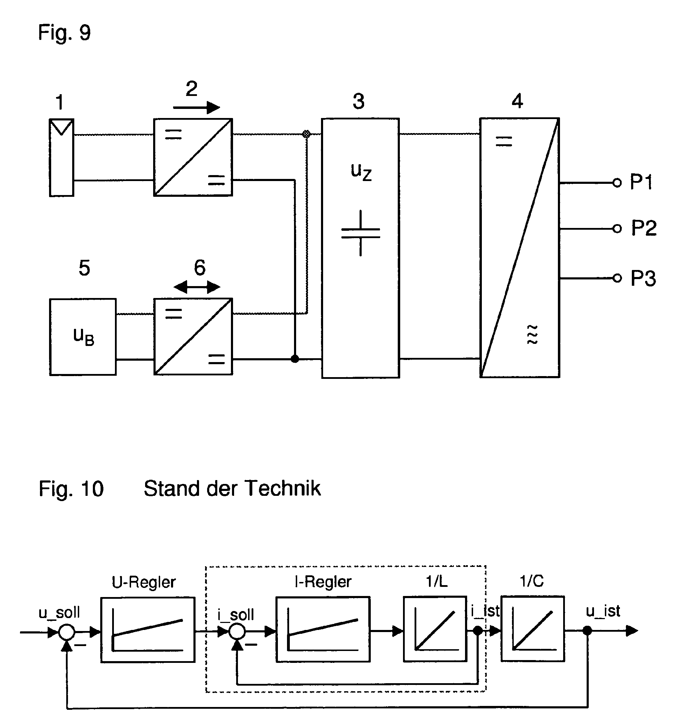

Damit sind alle möglichen Betriebszustände der in der Figur 2 dargestellten Schaltung beschrieben. Einsetzbar ist ein solcher bidirektionaler Steller z. B. in der Solartechnik für das Batteriemanagement eines Inselwechselrichters. Das Blockschaltbild der Figur 9 verdeutlicht die Verwendung eines bidirektionalen Stellers.

Die in der Figur 9 dargestellte Solaranlage wird von einem Solargenerator 1 gespeist. Dieser ist über einen unidirektional arbeitenden Hochsetzsteller 2 an den Gleichspannungszwischenkreis 3 angeschlossen. Die Energie des Solargenerators 1 kann dann von einem Wechselrichter 4 mit drei ausgangsseitigen Phasen (P1, P2, P3) ins öffentliche Stromnetz eingespeist werden.

In Zeiten, in denen der Solargenerator 1 mehr Leistung liefert als zur Einspeisung in das Stromnetz erforderlich ist, kann eine Speicherbatterie 5 über den bidirektionalen Gleichstromsteller 6 aufgeladen werden. Die Voraussetzung hierzu ist, dass die Spannung $u_z$ im Gleichspannungszwischenkreis 3 größer als die Spannung $u_B$ der Speicherbatterie 5 ist. Der Gleichstromsteller 6 arbeitet in diesem Fall als Tiefsetzsteller und die Energieflussrichtung ist vom Gleichspannungszwischenkreis 3 hin zur Speicherbatterie 5.

Sollte vom Stromnetz mehr elektrische Leistung gefordert werden, als augenblicklich vom Solargenerator 1 geliefert werden kann, kann die Speicherbatterie 5, sofern sie vorher ausreichend geladen wurde, zusätzlich Energie in den Gleichspannungszwischenkreis 3 einspeisen Der bidirektionale Gleichstromsteller 6 arbeitet dann als Hochsetzsteller, d. h. auch hier muss die Spannung $u_z$ im Gleichspannungszwischenkreis 3 größer als die Batteriespannung $u_B$ sein. Die Energieflussrichtung ist nun von der Speicherbatterie 5 hin zum Gleichspannungszwischenkreis 3.

In den heute verwendeten bidirektionalen Gleichstromstellern wird häufig zur Ansteuerung der Halbleiterschalter eine Pulsweitenmodulation mit fester Frequenz verwendet. Das führt dazu, dass je nach Lastfall die Schaltung im diskontinuierlichen oder im kontinuierlichen Betriebszustand oder im Betriebszustand an der Lückgrenze arbeiten kann und zwischen diesen Betriebszuständen hin und her wechselt.

Regelungstechnisch wird üblicherweise für einen solchen Gleichstromsteller ein unterlagerter Stromregelkreis vorgesehen. Dieser ist entweder in Hardware, z. B. mit einem Steuer-IC oder mit Hilfe eines Mikrocontrollers realisiert. In Photovoltaikwechselrichtern werden nahezu ausschließlich digital geregelte Systeme eingesetzt, so dass für die Stromregelung der Stromistwert in Echtzeit erfasst und verarbeitet werden muss.

Das regelungstechnische Ersatzschaltbild einer solchen Anordnung ist in der Figur 10 dargestellt. Die Regelung ist als eine Kaskadenregelung realisiert. Es existiert ein innerer "schneller" Regelkreis (Stromsollwert i_soll, I-Regler, integrierender Regler 1/L, Stromistwert i_ist; gestrichelt gekennzeichnet) und ein äußerer Regelkreis (Spannungssollwert u_soll, U-Regler, integrierender Regler 1/C, Spannungssollwert u_ist) zur Spannungsregelung.

Ein solcher Regler weist mehrere Nachteile auf:

- Es muss in Echtzeit der Stromistwert i_ist erfasst und verarbeitet werden.
- Je nach Betriebszustand der Schaltung (kontinuierlich, diskontinuierlich oder Transition Mode) ändern sich die Eigenschaften der Stromregelstrecke, so dass unter Umständen eine Anpassung im I-Regler vorgenommen werden muss.
- Da die Induktivität L der Speicherdrossel maßgeblich das Verhalten des Stromregelkreises bestimmt, darf für deren Wert eine gewisse Untergrenze nicht unterschritten werden.

- Wenn sich die Schaltung im kontinuierlichen Betriebszustand befindet, steigen die Verluste im aktiven Halbleiterschalter stark an, weil dann der Halbleiterschalter auf eine leitende Freilaufdiode schaltet. Die Reverse Recovery Ladung der Freilaufdiode beeinflusst massiv die Einschaltverluste des Halbleiterschalters.
- Um die sogenannten Reverse Recovery Verluste zu verringern, werden häufig Silizium Karbid Dioden an Stelle der üblichen Siliziumdioden eingesetzt. Solche Dioden sind extrem teuer, schwer verfügbar und nicht sehr robust.
- Wegen des "hart" schaltenden Betriebes der Leistungsendstufe wird die Schaltfrequenz häufig so niedrig wie möglich gewählt. Das führt zu einer Vergrößerung des Bauvolumens der Speicherdrossel.

Beschreibung eines bidirektionalen Transition Mode-Stellers

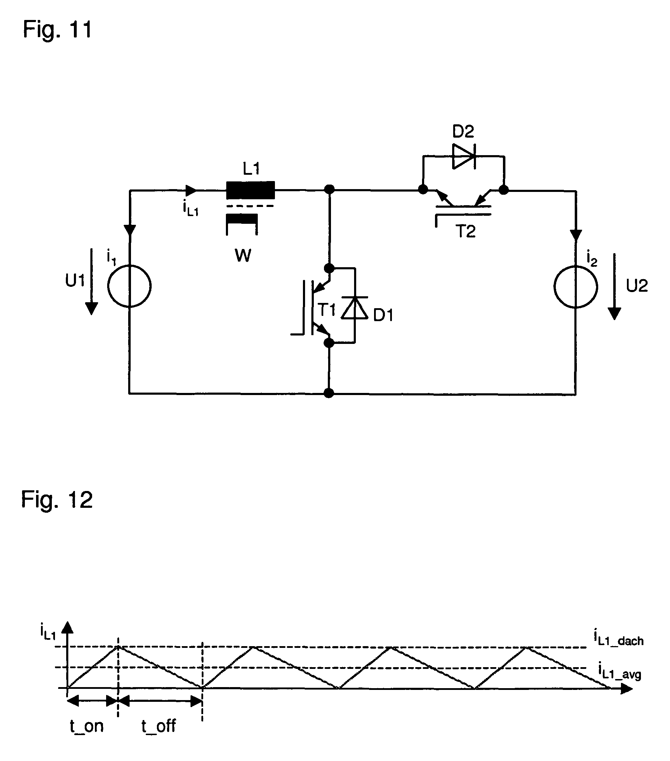

Die Figur 11 zeigt schematisch einen bidirektionaler Gleichstromsteller, der stets an der Lückgrenze betrieben werden kann. Dafür ist auf der Speicherdrossel L1 eine zusätzliche Wicklung W aufgebracht, die nur einige wenige Windungen aufzuweisen braucht und über die der Stromnulldurchgang in der Speicherdrossel L1 detektiert werden kann. Der Zeitpunkt des Stromnulldurchgangs wird beispielsweise von einem nichtdargestellten Mikrocontroller erkannt, der dann sofort wieder einen der Halbleiterschalter (T1 bzw. T2) ansteuert. Je nach Lastzustand stellt sich so eine variable Schaltfrequenz der Leistungsendstufe ein; je höher die Ausgangsleistung, desto niedriger wird die Schaltfrequenz.

Bezeichnet man die Zeit in der Aufmagnetisierungsphase mit "t_on" und die Zeit in der Abmagnetisierung mit "t_off", dann können die folgenden Gleichungen unter Berücksichtigung linearer Verhältnisse aufgestellt werden:

$$i_{L1\_dach} = \frac{u_1 \cdot t\_on}{L} \qquad\qquad i_{L1\_dach} = \frac{(u_2 - u_1) \cdot t\_off}{L}$$

Aus der Figur 12 ist ersichtlich, dass der Mittelwert $i_{L1\_avg}$ des Stromes $i_{L1}$ genau der Hälfte des maximalen Stromwerts $i_{L1\_dach}$ entspricht. Somit kann durch Vorgabe der Einschaltzeit t_on der Strom $i_{L1\_avg}$ direkt und verzögerungsfrei verstellt werden.

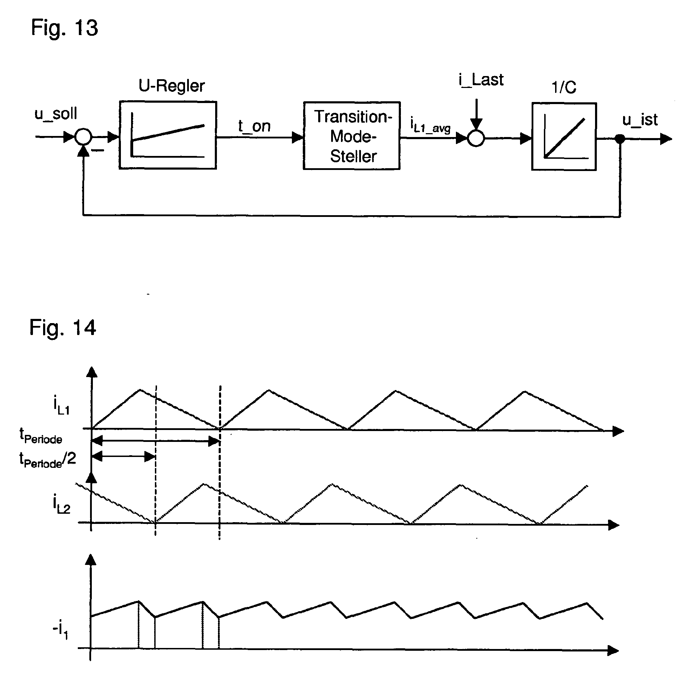

Damit ergibt sich für den Hochsetzstellerbetrieb das regelungstechnische Ersatzschaltbild gemäß der Figur 13. Ein unterlagerter Stromregelkreis ist hier nicht mehr erforderlich, weil durch die Stromnulldurchgangserkennung der Gleichstromsteller stets im Transition Mode, also ständig genau an der Lückgrenze, arbeitet und daher t_on proportional zu $i_{L1\_avg}$ ist. Der jeweilige Lastzustand wird im Regelkreis durch die Einflussgröße Laststrom i_Last berücksichtigt.

Nachteilig am Betrieb an der Lückgrenze ist allerdings die große Welligkeit des Speicherdrosselstromes $i_{L1}$ und damit auch im Ausgangsstrom $i_1$ bzw. $i_2$. Um diese zu verringern, ist ein Gleichstromsteller vorgesehen, der mehrere parallele Stromkanäle (I, II) aufweist. Einen derartigen Gleichstromsteller mit zwei Stromkanälen zeigt die Figur 1.

Zu Ausbildung des Gleichstromstellers können selbstverständlich auch mehr als zwei parallele Stromkanäle (I, II) vorgesehen sein, was trotz des größeren Bauteileaufwands vorteilhaft sein kann, da sich mit jedem weiteren Stromkanal die Welligkeit des Speicherdrosselstromes $i_{L1}$ verringert.

Der erste Stromkanal I ist durch die Speicherdrossel L1, die Halbleiterschalter T1 und T2 und die Dioden D1 und D2 gebildet; der zweite Stromkanal II entsprechend durch die Speicherdrossel L2, die Halbleiterschalter T3 und T4, sowie durch die Dioden D3 und D4.

Beide Stromkanäle (I, II) werden mit der gleichen Taktrate, aber jeweils mit einem zeitlichen Versatz getaktet. Der zur Taktung der Halbleiterschalter (T1, T3 bzw. T2, T4) vorgesehene Mikrocontroller kann dabei vorteilhafterweise die jeweils zu taktenden Halbleiterschalter (T1, T3 bzw. T2, T4) sämtlicher Stromkanäle (I, II) ansteuern.

Die Speicherdrossel L2 im zweiten, zum ersten Stromkanal I parallel geschalteten, Stromkanal II weist hier keine Instanz zur Erkennung eines Stromnulldurchgangs auf. Der Stromkanal II wird in Abhängigkeit von dem im ersten Stromkanal I erfassten Stromnulldurchgang gesteuert und kann daher als "Slavekanal" bezeichnet werden, während der erste Stromkanal I, dessen Speicherdrossel L1 eine Wicklung W zur Stromnulldurchgangserkennung aufweist, nachfolgend als "Masterkanal" bezeichnet wird.

Die Welligkeit im Ausgangsstrom $i_1$ bzw. $i_2$ wird minimal, wenn die Phasenverschiebung zwischen dem Masterkanal I und dem Slavekanal II oder gegebenenfalls auch den weiteren Slavekanälen, 360°/n (n = Anzahl der Stromkanäle) beträgt. Der Mikrocontroller bestimmt nun aus den erfassten Stromnulldurchgängen die Periodendauer des Masterkanals I, um aus dieser Information den Zündzeitpunkt für den Slavekanal II und gegebenenfalls auch für die weiteren Slavekanäle zu ermitteln.

In der Figur 14 sind die Stromverläufe für einen zweikanaligen Gleichstromsteller gemäß der Figur 1 dargestellt, der als Hochsetzsteller betrieben wird. Das obere Diagramm zeigt den Stromverlauf $i_{L1}$ durch die Speicherdrossel L1 im Masterkanal I; das mittlere Diagramm zeigt den Stromverlauf durch die Speicherdrossel L2 im Slavekanal II. Der Mikrocontroller bestimmt den zeitlichen Abstand der Stromnulldurchgänge $T_{Periode}$ des Masterkanals I in Echtzeit, um daraus dann den Zündzeitpunkt des Slavekanals II zu errechnen. Da mit dem Masterkanal I und dem Slavekanal II hier insgesamt zwei Stromkanäle (n = 2) realisiert sind, beträgt der zeitliche Versatz bei der Ansteuerung der Halbleiterschalter (T1, T3) des Slavekanals II $1/n = \frac{1}{2}$ Periodendauer $T_{Periode}/2$ gegenüber der Ansteuerung des Masterkanals I.

Die Figur 14 zeigt, dass der resultierende Ausgangsstrom $i_1$, hier invertiert als $-i_1$ dargestellt, eine deutlich geringere Welligkeit aufweist als die Stromverläufe ($i_{L1}$, $i_{L2}$) in jedem einzelnen der Stromkanäle (I, II). In einer praktischen Realisierung ist es vorteilhaft, statt nur eines Slavekanals II mehrere Slavekanäle vorzusehen, da hierdurch ein noch weitaus glatterer Ausgangsstrom erzielt werden kann.

Neben dem zuvor beschriebenen Hochsetzstellerbetrieb kann der Gleichstromsteller auch als Tiefsetzsteller betrieben werden, was insbesondere für Photovoltaikwechselrichter mit Batteriepuffer interessant ist.

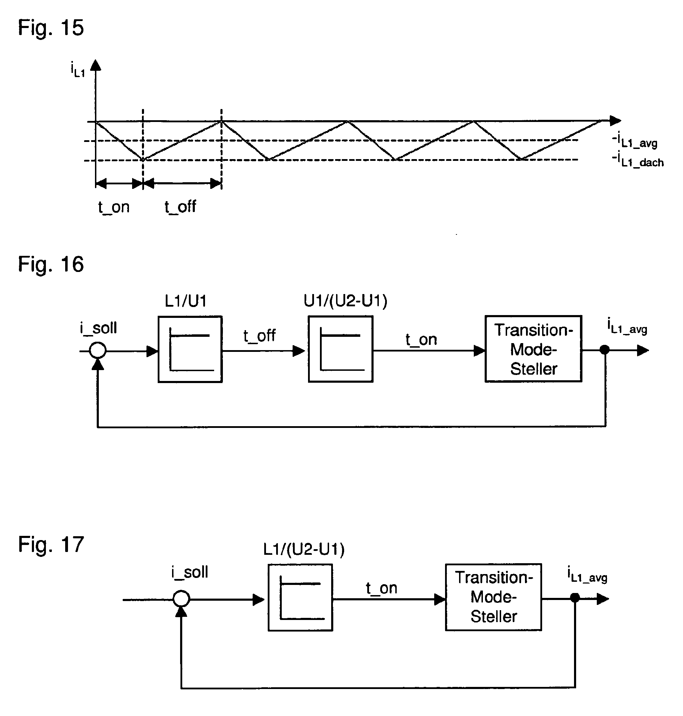

Für den Tiefsetzstellerbetrieb gelten sehr ähnliche Bedingungen wie für den Hochsetzstellerbetrieb. Aus dem in der Figur 15 skizzierten Stromverlauf $i_{L1}$ findet man die Bedingungen:

$$i_{L1\_dach} = \frac{u_1 \cdot t\_off}{L} \qquad\qquad i_{L1\_dach} = \frac{(u_2 - u_1) \cdot t\_on}{L}$$

Im Tiefsetzstellerbetrieb ist die Ausschaltzeit t_off proportional zum maximalen Strom $i_{L1\_dach}$ bzw. dem durchschnittlichen Strom $i_{L1\_avg}$ durch die Speicherdrossel L1. Da der Mikrocontroller aber nur die Einschaltzeit t_on direkt verstellen kann, muss eine weitere Bedingung herangezogen werden, um eine Regelung realisieren zu können. Aus den beiden zuletzt genannten Gleichungen kann der folgende Zusammenhang hergeleitet werden:

$$t\_on = t\_off \, \frac{u_1}{u_2 - u_1}$$

Indem der Mikrocontroller die Spannungen $u_1$ und $u_2$ mit erfasst, kann er die erforderliche Einschaltzeit t_on errechnen, die dann zum gewünschten t_off führt. Wie die aus der Figur 15 hervorgeht, ergibt die Summe aus t_on und t_off genau die Zeit zwischen zwei Stromnulldurchgängen, die vom Mikrocontroller erfasst wird. Solange die Schaltung im Betrieb an der Lückgrenze arbeitet, ist eine direkte Verstellung von $i_{L1\_avg}$ ohne Verzögerung möglich.

Damit kann wiederum ein Regelkreis realisiert werden, der in der Figur 16 skizziert ist. Wird der Tiefsetzstellerbetrieb zum Laden einer Speicherbatterie verwendet, so ist in der Regel kein überlagerter Spannungsregelkreis erforderlich. Der Sollwert des Ladestroms i_soll kann direkt vom Mikrocontroller vorgegeben werden. Die beiden Proportionalglieder (L1/U1, U1/(U2-U1)) in der Figur 16 können dann noch zu einem einzigen Proportionalglieder L1/(U2-U1) zusammengefasst werden, wodurch man den in der Figur 17 dargestellte Regelkreis erhält.

Durch Einsatz des Transitionmodestellers ist kann so der Strom ohne unterlagerten Stromregelkreis direkt und verzögerungsfrei verstellt werden.

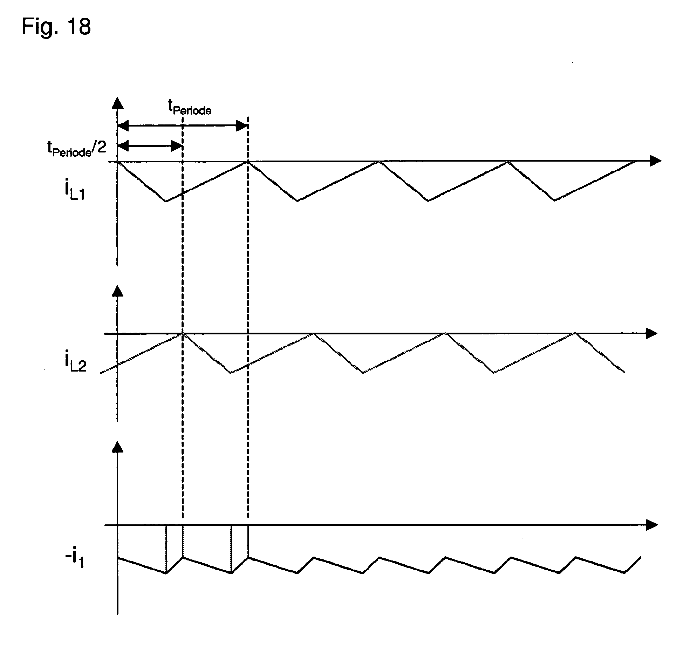

Die Figur 18 zeigt eine Skizze der Stromverläufe ($i_{L1}$, $i_{L2}$) in den Stromkanälen (I, II) und am Ausgang des Gleichstromstellers im Tiefsetzstellerbetrieb. Diese Stromverläufe ($i_{L1}$, $i_{L2}$) entsprechen genau den invertierten Stromverläufen für den Hochsetzstellerbetrieb, welche aus der Figur 14 ersichtlich sind. Entsprechend erhält man auch im Tiefsetzstellerbetrieb durch eine zeitversetzte Steuerung der Stromkanäle (I, II) einen besonders glatten Ausgangsstrom ($-i_1$).

**Bezugszeichen**

1    Solargenerator
2    Hochsetzsteller
3    Gleichspannungszwischenkreis

4    Wechselrichter
5    Speicherbatterie
6    Gleichstromsteller

D1 - D4    (Freilauf)dioden
I            erster Stromkanal (Masterkanal)
II           zweiter Stromkanal (Slavekanal)
L            Induktivität (der Speicherdrossel)
L1, L2      Speicherdrossel
T1 - T4     Halbleiterschalter
U1, U2      Spannung(squell)en
P1, P2, P3  Phasen
UZ          Spannung im Gleichspannungszwischenkreis
UB          Spannung der Speicherbatterie
W            Wicklung

$i_1$, $i_2$    Ausgangsstrom
$i_{T1}$, $i_{T2}$, $i_{D1...}$    Strom (durch das jeweils indizierte Bauelement)
$i_{L1\_avg}$    mittlerer Ausgangsstrom
i_ist    Stromistwert
i_Last    Laststrom
i_soll    Stromsollwert
t_on    Einschaltzeit
t_off    Ausschaltzeit
$T_{Periode}$    Periodenzeit (zeitlicher Abstand der Stromnulldurchgänge)
$T_{Periode}/2$    zeitlicher Versatz
u_ist    Spannungsistwert (Ausgangsspannung)
u_soll,    Spannungssollwert
$u_1$, $u_2$    Spannungen (der Spannungsquellen U1 und U2)
$u_B$    Batteriespannung
$u_{T1}$, $u_{T2}$    Ansteuerspannung (der Halbleiterschalter)
$u_z$    Spannung im Gleichspannungszwischenkreis

1/C, 1/L    integrierende Regler
L1/U1, U1/(U2-U1) L1/(U2-U1)    Proportionalglieder

**Patentansprüche**

1.  Mehrkanaliger Gleichstromsteller,
    mit mehreren parallelen Stromkanälen (I, II), die durch einen Mikrocontroller zueinander zeitversetzt gesteuert werden,
    wobei die Stromkanäle jeweils mindestens zwei Halbleiterschalter (T1,T2;T3,T4) aufweisen, durch die sie vom Mikrocontroller entweder als Hochsetzsteller oder als Tiefsetzsteller betrieben werden können,
    **dadurch gekennzeichnet,**
    **dass** wenigstens ein Stromkanal (I) eine Einrichtung zur Erfassung des Stromnulldurchgangs aufweist,
    **dass** der Mikrocontroller die Periodenzeit ($T_{Periode}$) der Stromnulldurchgänge in diesem Stromkanal (I) erfasst,
    **dass** der Mikrocontroller aufgrund der erfassten Periodenzeit ($T_{Periode}$) alle Stromkanäle (I, II) an der Lückgrenze betreibt, und
    **dass** der Mikrocontroller die Stromkanäle (I, II) mit einem zeitlichen Versatz ($T_{Periode}/2$) ansteuert, wobei der zeitliche Versatz ($T_{Periode}/2$) durch die erfasste Periodenzeit ($T_{Periode}$) geteilt durch die Anzahl der Stromkanäle gegeben ist.

2.  Gleichstromsteller nach Anspruch 1, **dadurch gekennzeichnet, dass** jeder Stromkanal (I, II) wenigstens eine Speicherdrossel (L1, L2) aufweist und die Speicherdrossel (L1) wenigstens eines Stromkanals (I) eine zusätzliche Wicklung (W) aufweist, deren Ausgangssignal der Mikrocontroller zur Erfassung des Stromnulldurchgang auswertet.

3.  Gleichstromsteller nach Anspruch 1, **dadurch gekennzeichnet, dass** der Gleichstromsteller Bestandteil einer Lade-/Entladeschaltung für eine Speicherbatterie (5) einer Photovoltaik-Anlage ist.

**4.** Gleichstromsteller nach Anspruch 3, **dadurch gekennzeichnet, dass** der Mikrocontroller den Gleichstromsteller zum Laden der Speicherbatterie (5) als Tiefsetzsteller und zum Entladen der Speicherbatterie (5) als Hochsetzsteller steuert.

**5.** Gleichstromsteller nach Anspruch 4, **dadurch gekennzeichnet, dass** die Einschaltzeit (t_on) für jeweils einen der Halbleiterschalter (T1, T2, T3, T4) eines Stromkanal (I, II) einen zur Einschaltzeit (t_on) proportionalen Ausgangsstrom ($i_1$, $i_2$) des Gleichstromstellers bewirkt.

**6.** Gleichstromsteller nach Anspruch 5, **dadurch gekennzeichnet, dass** die Einschaltzeit (t_on) im Hochsetzstellerbetrieb durch einen überlagerten Spannungsregelkreis (U-Regler, 1/C) für die Ausgangsspannung (u_ist) des Gleichstromstellers geregelt wird.

**7.** Gleichstromsteller nach Anspruch 5, **dadurch gekennzeichnet, dass** die Einschaltzeit (t_on) im Tiefsetzstellerbetrieb proportional zum mittleren Ausgangsstrom ($i_{L1-avg}$) und umgekehrt proportional zur Ausgangs- /Eingangsspannungsdifferenz ($U_2$-$U_1$) ist.

**8.** Gleichstromsteller nach einem der vorgenannten Ansprüche, **dadurch gekennzeichnet, dass** ein Mikrocontroller die Halbleiterschalter (T1, T2, T3, T4) sämtlicher Stromkanäle (I, II) steuert.

**Claims**

**1.** Multi-channel DC chopper controller,
having a plurality of parallel current channels (I, II) which are controlled by a microcontroller with a time offset between them,
with each of the current channels having at least two semi-conductor switches (T1, T2; T3, T4) by way of which they can be operated by the microcontroller either as boost converters or as buck converters,
**characterised in that**
at least one current channel (I) has a facility for sensing the current zero crossing,
that the microcontroller records the period of time ($T_{Period}$) of the current zero crossings in the said current channel (I),
that the microcontroller operates all the current channels (I, II) in the critical conduction mode based on the recorded period of time ($T_{Period}$), and
that the microcontroller actuates the current channels (I, II) with a time offset ($T_{Period}$/2), for which purpose the time offset ($T_{Period}$/2) is provided by the recorded period of time ($T_{Period}$) divided by the number of current channels.

**2.** DC chopper controller according to Claim 1, **characterised in that** each current channel (I, II) has at least one storage choke (L1, L2) and the storage choke (L1) of at least one current channel (I) has an additional winding (W) whose output signal is evaluated by the microcontroller for the purpose of recording the current zero crossing.

**3.** DC chopper controller according to Claim 1, **characterised in that** the DC chopper controller is a constituent of a charging/discharging circuit for a storage battery (5) of a photovoltaic system.

**4.** DC chopper controller according to Claim 3, **characterised in that** the microcontroller controls the DC chopper controller as a buck converter for the purpose of charging the storage battery (5) and as a boost converter for the purpose of discharging the storage battery (5).

**5.** DC chopper controller according to Claim 4, **characterised in that** the activation time (t_on) for one of the semi-conductor switches (T1, T2, T3, T4) of one current channel (I, II) in each case effects an output current ($i_1$, $i_2$) of the DC chopper controller which is proportional to the activation time (t_on).

**6.** DC chopper controller according to Claim 5, **characterised in that** the activation time (t_on) in the boost converter mode is controlled by a superimposed voltage control loop (U-Regler, 1/C) for the output voltage (u_ist) of the DC chopper controller.

**7.** DC chopper controller according to Claim 5, **characterised in that** the activation time (t_on) is proportional to the average output current ($i_{L1\_avg}$) in buck converter mode and, conversely, is proportional to the output/input voltage difference ($U_2$-$U_1$).

8. DC chopper controller according to any of the aforesaid claims, **characterised in that** a microcontroller controls the semi-conductor switches (T1, T2, T3, T4) of all current channels (I, II).

**Revendications**

1. Convertisseur de courant continu multicanaux
   avec plusieurs canaux de courant (I, II) parallèles, qui peuvent être commandés avec décalage temporel les uns par rapport aux autres,
   sachant que lesdits canaux de courant sont dotés chacun d'au moins deux commutateurs semi-conducteurs (T1, T2 ; T3, T4) au moyen desquels ils peuvent être exploités soit en tant que convertisseurs élévateurs ou soit en tant que convertisseurs abaisseurs,
   **caractérisé en ce**
   **qu'**au moins un canal de courant (I) présente un dispositif pour la saisie du passage par zéro,
   **que** le microcontrôleur saisit le temps périodique ($T_{Periode}$) des passages par zéro dans ce canal de courant (I),
   **que** le microcontrôleur, en fonction du temps périodique ($T_{Periode}$) détecté, exploite tous les canaux de courant (I, II) à la limite de la discontinuité, et
   **que** le microcontrôleur excite les canaux de courant (I, II) avec un décalage temporel ($T_{Periode}/2$), sachant que ledit décalage temporel ($T_{Periode}/2$) est déterminé par le temps périodique ($T_{Periode}$) detecté, divisé par le nombre de canaux de courant.

2. Convertisseur de courant continu selon la revendication 1, **caractérisé en ce que** chacun des canaux de courant (I, II) présente au moins une bobine d'accumulation (L1, L2) et que ladite bobine d'accumulation (L1) d'au moins un canal de courant (I) présente un enroulement supplémentaire (W), dont le signal de sortie est évalué par le microcontrôleur pour la saisie du passage par zéro.

3. Convertisseur de courant continu selon la revendication 1, **caractérisé en ce que** ledit convertisseur de courant est un composant d'un circuit de charge /décharge pour une batterie de stockage (5) d'une installation photovoltaïque.

4. Convertisseur de courant continu selon la revendication 3, **caractérisé en ce que** le microcontrôleur commande le convertisseur de courant continu en tant que convertisseur abaisseur pour la charge de la batterie de stockage (5) et en tant que convertisseur élévateur pour la décharge de la batterie de stockage (5).

5. Convertisseur de courant continu selon la revendication 4, **caractérisé en ce que** le temps d'allumage (t_on) pour l'un des commutateurs semi-conducteurs (T1, T2, T3, T4) de chaque canal de courant (I, II) provoque un courant de sortie ($i_1$, $i_2$) du convertisseur de courant proportionnellement audit temps d'allumage (t_on).

6. Convertisseur de courant continu selon la revendication 5, **caractérisé en ce que** le temps d'allumage (t_on) en fonctionnement en tant que convertisseur élévateur est réglé par un circuit de contrôle de tension (U-Regler, 1/C) superposé pour la tension de sortie (u_ist) du convertisseur de courant.

7. Convertisseur de courant continu selon la revendication 5, **caractérisé en ce que** le temps d'allumage (t_on) en fonctionnement en tant que convertisseur abaisseur est proportionnel au courant de sortie moyen ($i_{LI\_avg}$) et inversement proportionnel à la différence de tension sortie / entrée ($U_2$-$U_1$).

8. Convertisseur de courant continu selon l'une des revendications précédentes, **caractérisé en ce qu'**un microcontrôleur commande les commutateurs semi-conducteurs (T1, T2, T3, T4) de tous les canaux de courant (I, II).

Fig. 1

Fig. 2          Stand der Technik

Fig. 3

Fig. 4

Fig. 5

Fig. 6

Fig. 7

$u_{T2}$

$i_{T2}$

$i_{D1}$

$i_{L1}$

Fig. 8

$u_{T2}$

$i_{T2}$

$i_{D1}$

$i_{L1}$

Fig. 9

Fig. 10    Stand der Technik

Fig. 11

Fig. 12

## Fig. 13

## Fig. 14

Fig. 15

Fig. 16

Fig. 17

Fig. 18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004011801 A1

**In der Beschreibung aufgeführte Nicht-Patentliteratur**

- **BLAISE DESTRAZ et al.** High Efficient Interleaved Multi-channel dc/dc Converter Dedicated to Mobile Applications. *THE 2006 IEEE INDUSTRY APPLICATIONS CONFERENCE FORTY-FIRST IAS ANNUAL MEETING, CONFERENCE RECORD OF, IEEE, PI,* 01. Oktober 2006, ISBN 978-1-4244-0364-6, 2518-2523